# EUROPÄISCHE PATENTSCHRIFT

(11) **EP 0 529 398 B1**
(45) Veröffentlichungstag und Bekanntmachung des Hinweises auf die Patenterteilung: **22.04.1998**
(21) Anmeldenummer: 92113649.5
(22) Anmeldetag: 11.08.1992
(51) Int. Cl.: B01D 29/15, B01D 29/23, B01D 29/44, B01D 29/54, B01D 29/64, B01D 29/68

(54) **Filter für Flüssigkeiten**
Liquid filter
Filtre pour liquids

(30) Priorität: 26.08.1991 DE 4128210
(43) Veröffentlichungstag der Anmeldung: 03.03.1993
(73) Patentinhaber: FILTERWERK MANN & HUMMEL GMBH, 71631 Ludwigsburg (DE)
(72) Erfinder: Schaal, Wolfgang, W-7150 Backnang (DE)
(74) Vertreter: Voth, Gerhard, Dipl.-Ing.

(56) Entgegenhaltungen:
- EP-A- 0 264 900
- WO-A-90/08587
- DE-A- 3 621 724
- FR-A- 2 236 652
- US-A- 2 854 142
- US-A- 4 818 402

## Beschreibung

Die Erfindung betrifft ein Filter für Flüssigkeiten nach dem Oberbegriff des Anspruchs 1 sowie eine Reinigungseinrichtung zum Reinigen eines Filters.

Aus der DE-A-39 05 854 ist eine Spaltfilterkerze bekannt, deren Filterzylinder aus einer Mehrzahl übereinander angeordneter Ringe besteht. Die Filterzylinder sind mit identischen Spaltweiten paarweise konzentrisch zwischen einer Bodenscheibe und einer Deckelscheibe angeordnet. Es ist ferner eine Öffnung zum Abführen des Filtrats und eine Zuströmöffnung vorgesehen.

Die Anordnung von Filterzylindern paarweise und konzentrisch zueinander ist auch schon aus der DE-PS 8 25 537 bekannt. Dort sind verschiedene Varianten eines Filters dargestellt, so beispielsweise eine Variante, bei der die einzelnen Filterelemente einen inneren und einen äußeren Spaltbereich aufweisen und die Schmutzflüssigkeitszufuhr zwischen den konzentrisch angeordneten Spaltfilterbereichen erfolgt. Ein Nachteil dieser Anordnungen ist darin zu sehen, daß eine mechanische Abreinigung der Oberfläche der Filterzylinder nicht vorgesehen, beziehungsweise aufgrund des Aufbaus der einzelnen Elemente auch nicht möglich ist.

Diese Ausführungsformen ermöglichen allenfalls die Rückspülung durch Umkehr der Strömungsrichtungen. Dabei läßt sich jedoch fest anhaftender Schmutz auf den Filterzylindern nicht wirksam beseitigen.

Es ist weiterhin aus der DE-A-34 31 396 ein rückspülbares Filter für Flüssigkeiten bekannt, bei welchem über ein Filterelement ein verfahrbarer Spülspalt angeordnet ist und dieser Spülspalt mit einer Spülleitung und einem Antriebsmotor versehen ist. Die gesamte Anordnung von Spülspalt und Spülleitung ist auf einer hohlzylindrischen Welle befestigt, die mit einem hydraulischen Motor gedreht werden kann. Mit dieser Anordnung läßt sich zwar ein einzelnes Filterelement abreinigen. Die Abreinigung mehrerer Filterelemente, insbesondere auch mehrerer konzentrisch zueinander angeordneter Filterelemente, ist mit dieser Reinigungseinrichtung nicht möglich.

US-A-4 818 402 beschreibt eine Filtervorrichtung, worin ein hohlzylindrischer Filterzylinder mit dazu gehörender Reinigungseinrichtung zu sehen ist.

Der Erfindung liegt deshalb die Aufgabe zugrunde, die genannten Nachteile zu vermeiden und ein Filter für Flüssigkeiten zu schaffen, das mehrere konzentrisch angeordnete Filterzylinder aufweist, wobei die Filterzylinder mechanisch abreinigbar sind. Diese Aufgabe wird durch den Hauptanspruch gelöst.

Ein wesentlicher Vorteil des erfindungsgemäßen Filters ist darin zu sehen, daß die konzentrisch angeordneten Filterzylinder in der Weise an der Struktur des gesamten Gehäuses angeordnet sind, daß eine Abreinigungseinrichtung die gesamte wirksame Fläche der Filterzylinder überstreichen kann. Dies bedeutet, daß die Verbindung der beiden Filterzylinder einseitig durchgeführt wird, so daß auf der, der Verbindung gegenüberliegenden Seite, eine Reinigungseinrichtung in den konzentrischen Zwischenraum eingreifen kann und über den gesamten Umfang drehbar ist.

Ein weiterer wesentlicher Vorteil des erfindungsgemäßen Filters besteht darin, daß die Reinigungseinrichtung geeignet ist, beide Filterzylinder gleichzeitig abzureinigen. Dies reduziert ganz erheblich den konstruktiven Aufwand für die Reinigungseinrichtung und spart außerdem Abreinigungszeit.

Gemaß einer Weiterbildung der Erfindung ist vorgesehen, zusätzliche Filterzylinder paarweise und konzentrisch zu dem ersten und zweiten Filterzylinder anzuordnen. Auch hier ist für die paarweise angeordneten Filterzylinder jeweils lediglich eine einzige Reinigungseinrichtung erforderlich, die gemeinsam mit der ersten Reinigungseinrichtung gedreht werden kann, so daß der Schmutz über sämtliche Filterzylinder mit einem einzigen Reinigungszyklus entfernt werden kann. Die Anzahl der Filterzylinder kann beliebig erhöht werden.

Der konstruktive Aufbau eines solchen Filters besitzt den Vorteil, daß je nach erforderlicher Filterfläche, die einzelnen Komponenten nach Art eines Baukastensystems beliebig erweiterbar sind, so daß ein bestehendes Grundsystem ohne zusätzlichen konstruktiven Aufwand ergänzt werden kann.

Bei dieser Bauart, bei der mehrere konzentrisch angeordnete Filterelemente vorgesehen sind, erhöht sich bei Baulängenvergrößerung im Gegensatz zu Einfachfiltern die wirksame Filterfläche überproportional.

Die Erfindung läßt sich bei sämtlichen Spaltfilterarten anwenden. Bekanntlich werden Filter sowohl als Plattenspaltfilter als auch als Drahtspaltfilter oder Spaltrohrfilter hergestellt. Während bei einem Draht- oder Spaltrohrfilter eine Drahtwicklung um einen Trägerkörper herum angeordnet ist, sind beim Plattenspaltfilter einzelne Platten aufeinander - unter Bildung von Spaltzwischenräumen - gestapelt. Es besteht ferner die Möglichkeit, ein Filter nach Art eines Siebfilters herzustellen, d.h. auf einen Trägerkörper wird ein Siebgewebe oder ein Lochblech aufgelegt, welches geeignet ist, den Schmutz aus der zu filternden Flüssigkeit zu entfernen. Sämtliche Arten von Filtern können in Mehrfachanordnung, d.h. in konzentrisch zueinander angeordneten Filterzylindern aufgebaut werden.

Die Abreinigung ist von der Art des Filters unabhängig. Die Reinigungseinrichtung kann kontinuierlich umlaufen und damit ständig die Oberfläche der Filterzylinder abreinigen. Dies ist insbesondere bei sehr hohem Schmutzanfall zweckmäßig. Es besteht jedoch auch die Möglichkeit, diskontinuierlich zu reinigen, d.h. in Abhängigkeit des Durchflußwiderstandes, der beispielsweise über eine Druckdifferenzmessung ermittelt werden kann. Es ist ebenso möglich, in bestimmten Zeitabständen einen Reinigungszyklus durchzuführen.

Gerade bei der diskontinuierlichen Reinigung ist gemäß einer vorteilhaften Ausgestaltung der Erfindung vorgesehen, eine Schmutzabfuhrleitung mit einem Absperrventil zu versehen, das während des Reinigungszyklus geöffnet wird. Der Schmutz kann in einen drucklosen Behälter eingeleitet werden. In diesem Behälter kann ein eine weitere Verdichtung des Schmutzes bzw. eine Entwässerung vorgenommen werden.

Gemäß einer Ausgestaltung der Erfindung besteht die Reinigungseinrichtung aus einem Schmutzaustragsrohr, welches einen Einlaßschlitz aufweist, der sich über die gesamte wirksame Filterlänge erstreckt. Zwei Schaber sind an dem Schmutzaustragsrohr so angeordnet, daß jeder Schaber jeweils an einem der Filterzylinder unter Vorspannung anliegt. Es ist weiterhin eine Begrenzungswand vorgesehen, die in Verbindung mit dem Schaber und dem Schmutzaustragsrohr eine Schmutzkammer bildet. Die Reinigung kann sowohl zweiphasig als auch einphasig vorgenommen werden. Bei einer zweiphasigen Reinigung wird zunächst ohne das Absperrventil der Schmutzabfuhrleitung zu öffnen, die Reinigungseinrichtung entlang der Oberfläche der Filterzylinder bewegt. Dabei wird der Schmutz mittels der Schaber abgenommen und in der Schmutzkammer gesammelt. Nach dieser ersten Phase wird das Absperrventil geöffnet. Durch den Flüssigkeitsdruck, der in dem Filtergehäuse herrscht, strömt Flüssigkeit über die Spalte in die Schmutzkammer, so daß der gesamte Schmutz über die Schmutzabfuhrleitung ausgetragen wird.

Bei einer einphasigen Reinigung wird gleichzeitig mit dem Bewegen der Reinigungseinrichtung das Absperrventil geöffnet. Dabei strömt kontinuierlich durch die Spalte Flüssigkeit in die Schmutzkammer und wird mit dem entfernten Schmutz über die Schmutzabfuhrleitung ausgetragen.

Das einphasige Verfahren hat den Vorteil, daß während der Reinigung aufgrund des in dem Filter herrschenden Flüssigkeitsdrucks eine Rückspülung der Spalte erfolgt. Das zweiphasige Verfahren hat demgegenüber den Vorteil, daß bei der Abreinigung der Spalte zunächst keine Flüssigkeit ausgetragen wird. Erst nachdem die Schmutzkammer mit dem abgereinigten Schmutz gefüllt ist, erfolgt ein Ableiten des Schmutzes mit wenig Flüssigkeit.

Eine vorteilhafte Weiterbildung der Reinigungseinrichtung sieht vor, die Begrenzungswand sehr dicht bis an die Filterzylinder heranzuführen. Allerdings muß gewährleistet sein, daß auch die größten Schmutzpartikel noch zwischen Filterzylinder und Begrenzungswand hindurchgelangen können.

Um die Druckverluste zwischen Begrenzungswand und Filterzylinder möglichst gering zu halten, wird gemäß einer Weiterbildung der Erfindung vorgeschlagen, die Länge l des Spaltes zwischen der Begrenzungswand und dem benachbart liegenden Filterzylinder in Umfangsrichtung so zu gestalten, daß eine im Verhältnis zu der Höhe h des Spaltes große wirksame Abdichtlänge erzielt wird.

Eine weitere Variante einer Reinigungseinrichtung sieht vor, ein Profilelement zwischen den beiden Filterelementen anzuordnen, welches mit seitlich angeordneten Abstreifern versehen ist, die unter Federvorspannung auf die Oberfläche der Filterzylinder gerichtet sind. Auch hier ist eine Begrenzungswand vorgesehen, so daß zwischen Profilelement und Begrenzungswand eine Schmutzkammer gebildet wird.

Der Antrieb der Reinigungseinrichtung kann gemäß einer Ausgestaltung der Erfindung elektrisch, pneumatisch oder hydraulisch erfolgen. Es ist selbstverständlich auch möglich, die Reinigungseinrichtung manuell zu bewegen.

Bei der Anwendung einer Druckdifferenzmeßeinrichtung, die den Flüssigkeitsdruck vor und nach dem Filter sensiert und welcher ein Regelkreis nachgeschaltet ist, der in Abhängigkeit von dem Differenzdruck ein Signal erzeugt, kann die Abreinigung des Filters automatisch durchgeführt werden, so daß sich eine Wartung oder eine Überwachung erübrigt. Selbstverständlich wird bei einer automatischen Abreinigung auch das Absperrventil angesteuert.

Eine weitere Ausgestaltung der Reinigungseinrichtung sieht vor, zwischen dem Antrieb und der Spindel der Reinigungseinrichtung eine Kupplung mit einem Drehmomentbegrenzer anzuordnen. Dies hat den Vorteil, daß bei einer Blockierung der Reinigungseinrichtung durch evtl. eintretenden Grobschmutz keine Zerstörung des Filterzylinders bzw. der Filteroberfläche bewirkt wird.

Die einzelnen Filterzylinder sind, wie bereits erwähnt, an einer Deckscheibe befestigt. Gemäß einer vorteilhaften Ausgestaltung der Erfindung sind die Filterzylinder mit Stehbolzen versehen, die sich über die gesamte Länge derselben erstrecken. Damit ist gewährleistet, daß auch das der Deckscheibe gegenüberliegende Ende der Filterzylinder zuverlässig eingespannt ist und die Reinigungseinrichtung in einfacher Weise in den konzentrischen Zwischenraum zwischen den Filterzylindern eingreifen kann.

Die Erfindung wird nachfolgend anhand von Ausführungsbeispielen näher erläutert. Es zeigt:
- Figur 1: eine schematische Darstellung eines Filters mit konzentrisch angeordneten Filterzylindern
- Figur 1a: eine Variante der in Figur 1 gezeigten Darstellung
- Figur 2: der konstruktive Aufbau eines Filters mit zwei konzentrisch angeordneten Filterzylindern
- Figur 3: eine Schnittdarstellung, Schnitt A-A von Figur 2
- Figur 4: eine Variante einer Reinigungseinrichtung
- Figur 5: eine Detaildarstellung aus Figur 4
- Figur 6: eine weitere Variante einer Reinigungseinrichtung.

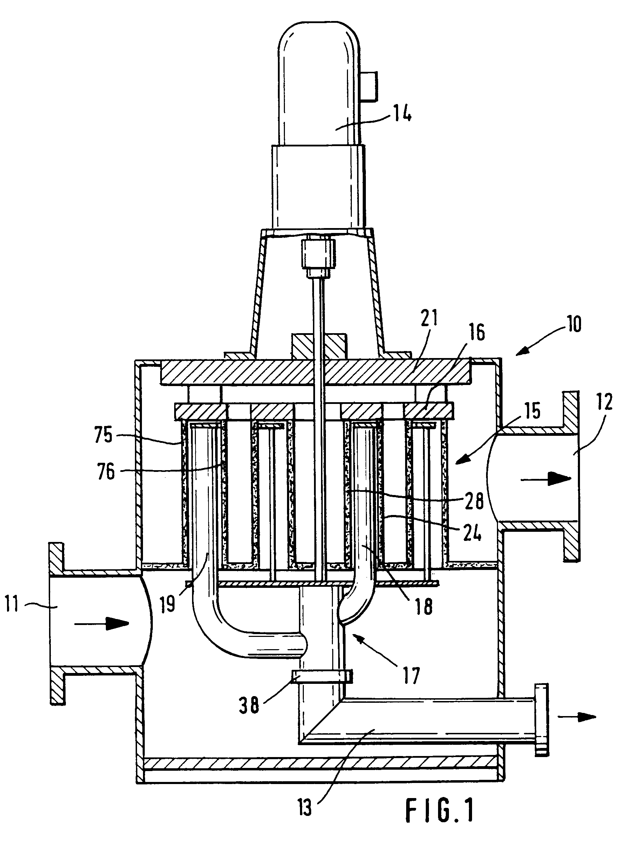

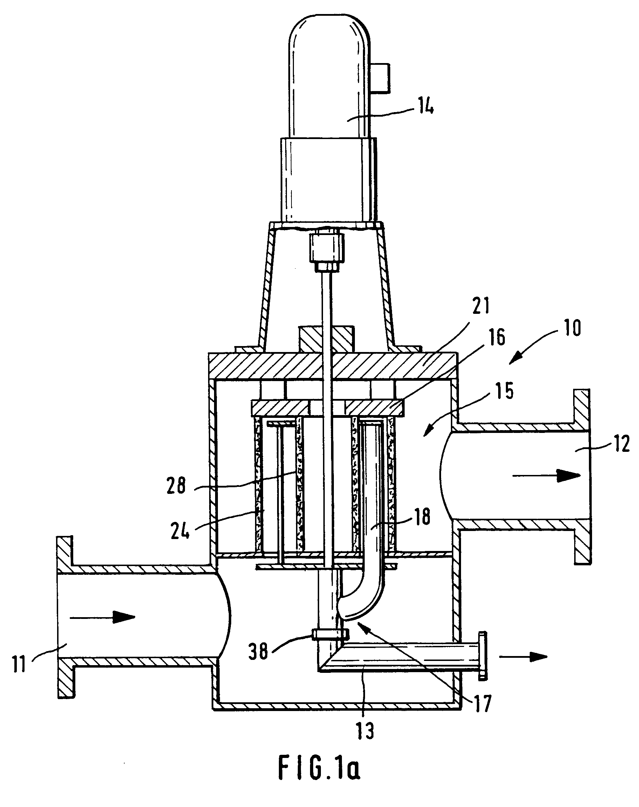

Die schematische Darstellung eines Filters gemäß Figur 1 zeigt ein Gehäuse 10 mit einem Zulauf 11, in welchen die zu filtrierende Flüssigkeit einströmt, einen Ablauf 12 für die gereinigte Flüssigkeit, eine Schmutzabfuhrleitung 13 und einen auf dem Gehäuse 10 angeordneten Antriebsmotor 14 zum Antrieb der Reinigungseinrichtung. In dem Gehäuse 10 befinden sich vier konzentrisch angeordnete Filterzylinder 24, 28, 75, 76 in Form von Spaltrohren. Diese sind an ihrer Oberseite mit einer Deckscheibe 16 an dem Filterkopf 21 befestigt. Zwischen jeweils zwei benachbart liegenden Filterzylindern erstreckt sich je ein Reinigungsarm 18, 19 einer Reinigungseinrichtung 17. Die beiden Reinigungsarme 18, 19 sind über die Schmutzabfuhrleitung 13 miteinander verbunden, wobei die Schmutzabfuhrleitung 13 mittels des Antriebsmotors 14 in eine Drehbewegung versetzt wird, so daß die Oberflächen der Filterzylinder auf der Zulaufseite abgereinigt werden.

Die ungereinigte Flüssigkeit gelangt über den Zulauf 11 in den Zwischenraum zwischen die Filterzylinder 24, 28, 75, 76. Der Schmutz lagert sich an den Oberflächen dieser Filterzylinder ab. Die gereinigte Flüssigkeit strömt durch das Innere der Filterzylinder in den Bereich zwischen Filterkopf 21 und Deckscheibe 16 zu dem Ablauf 12.

Ein solches Filter ist beliebig erweiterbar. Es können weitere konzentrisch angeordnete Filterzylinder vorgesehen werden. Für jedes Paar dieser Filterzylinder ist ein weiterer Reinigungsarm erforderlich, welcher ebenfalls in die Schmutzabfuhrrinne einmündet.

In Figur 1a ist eine Variante des in Figur 1 gezeigten Filters dargestellt. Gleiche Teile sind mit gleichen Bezugszeichen versehen. Diese Variante zeichnet sich dadurch aus, daß lediglich zwei Filterzylinder 24, 28 vorgesehen sind. Außerdem ist die Schmutzabfuhrleitung 13 nicht durch den Boden des Gehäuses 10 geführt, sondern innerhalb des Filtratraumes abgekröpft und über eine seitlich am Gehäuse vorgesehene Öffnung nach außen geführt. Während der axial ausgerichtete Teil der Schmutzabfuhrleitung drehbar angeordnet ist, ist der untere Teil fest mit dem Gehäuse verbunden. Die Abdichtung dieser beiden Teile zueinander erfolgt über eine Drehdurchführung mittels einer Buchse 38.

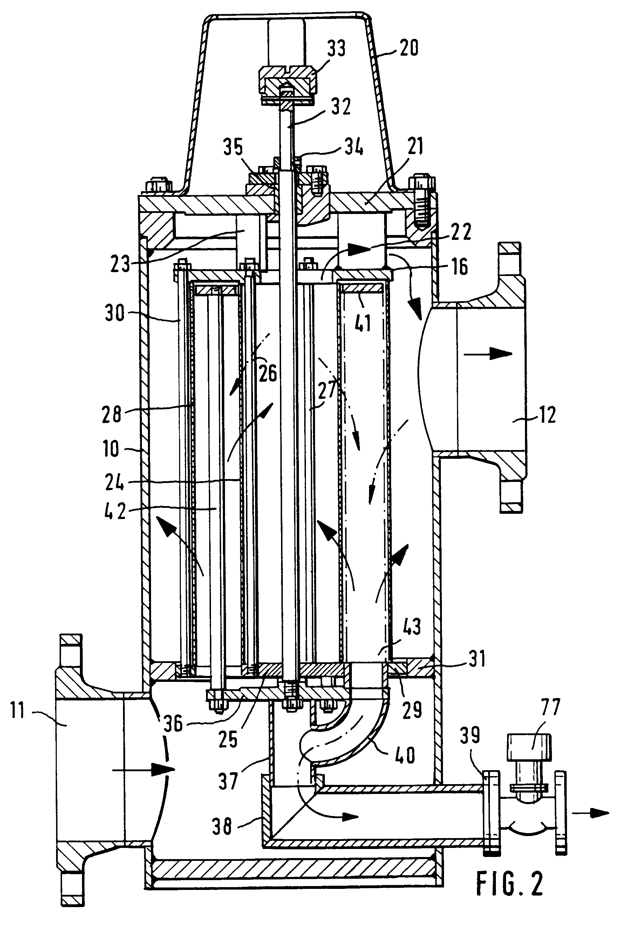

In Figur 2 ist ein konstruktiver Aufbau eines Filters mit zwei konzentrischen Filterzylindern dargestellt. Auch hier ist an einem Gehäuse 10 der Zulauf 11 sowie der Ablauf 12 angeordnet. Das Gehäuse ist mit einem Filterkopf 21 verschlossen. An diesem sind Distanzstücke 22 befestigt. An der Unterseite der Distanzstücke 22 befindet sich die Deckscheibe 16, die gleichzeitig die Tragplatte für die Filterzylinder darstellt. Ein innerer Filterzylinder 24, der als Spaltrohr ausgestaltet ist, zeigt an seinem unteren Ende eine Abschlußplatte 25 und wird durch Stehbolzen 26 an der Deckscheibe 16 gehalten. Ein äußerer Filterzylinder 28 weint an seinem unteren Ende eine Ringplatte 29 auf, die über Stehbolzen 30 mit der Deckscheibe 16 verspannt ist. Die Ringplatte 29 hat an ihrem äußeren Umfang eine Abdichtfläche, welche bei einer hohen Filterfeinheit mit einem O-Ring, zur besseren Abdichtung, bestückt werden kann.

Die Abdichtfläche trennt die Schmutz- von der Reinseite über den Zwischenboden 31 ab.

Mit dem Filterkopf 21 ist eine Konsole (Auflagebock 20) befestigt. Auf dieser kann ein hier nicht dargestellter Antriebsmotor aufgesetzt werden.

Innerhalb der Konsole 20 ist auf der Spindel 32 eine Kupplung 33 angeordnet. Diese hat die Aufgabe, das Drehmoment, welches über den hier nicht dargestellten Antriebsmotor auf die Spindel 32 übertragen wird, zu begrenzen. Die Spindel 32 trägt einen Stellring 34 und ist durch eine Buchse 35 mit Dichtung hindurchgeführt. An dem unteren Ende der Spindel 32 befindet sich eine Trägerplatte 36. An dieser Trägerplatte 36 ist eine Schmutzabfuhrleitung 37 befestigt. Diese Schmutzabfuhrleitung 37 ist an ihrem unteren Ende drehbar zum Schmutzaustrag 39 in einer Buchse 38 gelagert. Der Schmutzaustrag 39 besteht aus einem Rohr und einem Flansch und ist starr an dem Gehäuse 10 befestigt. Am Schmutzaustrag 39, welcher durch das Gehäuse 10 geführt wird, ist ein Ablaßventil 77 befestigt.

An der Schmutzabfuhrleitung befindet sich ein Abzweig 40. Dieser führt zu einem Schmutzaustragrohr 43, welches sich über die gesamte wirksame Filterlänge der Filterzylinder 24, 28 erstreckt. Das Schmutzaustragrohr trägt an seinem oberen Ende eine Ringscheibe 41. Diese ist an der dem Schmutzaustragrohr gegenüberliegenden Seite über Distanzstücke 42 mit der Trägerplatte 36 verbunden. Diese Distanzstücke haben die Aufgabe, der Reinigungseinrichtung die erforderliche Stabilität zu geben.

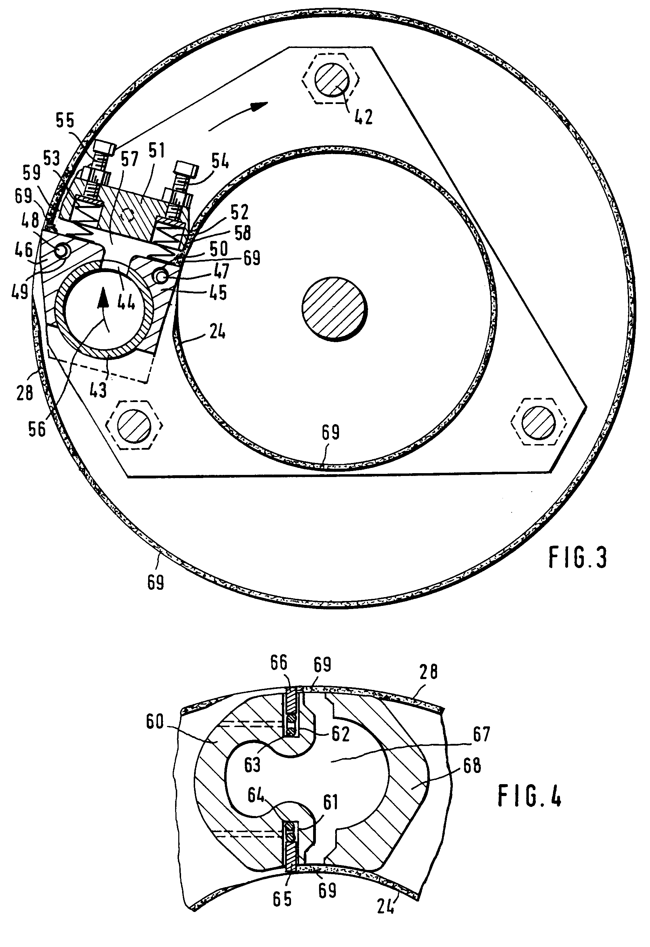

Einen Schnitt durch eine Reinigungseinrichtung mit den zu reinigenden Spaltrohren zeigt Figur 3. Innerer Filterzylinder 24 und äußerer Filterzylinder 28 sind lediglich schematisch dargestellt. Das Schmutzaustragrohr 43 ist in axialer Richtung mit einem Schlitz 44 versehen. An den Seiten des Schmutzaustragrohrs 43 sind zwei Schaber 45, 46 lose angelegt. Diese können sich längs des Umfangs des Schmutzaustragrohrs innerhalb eines gewissen Bereichs bewegen. Dieser Bewegungsbereich wird durch jeweils zwei Stifte 47, 48, die an der Trägerplatte 36 und an der Ringscheibe 41 befestigt sind, begrenzt, wobei die Stifte in Bohrungen 49, 50 der Schaber 45, 46 eingreifen. Dem Schmutzaustragrohr gegenüberliegend ist eine Begrenzungswand 51 vorgesehen. Diese ist fest mit der Ringscheibe 41 und der Trägerplatte 36 verbunden.

In der Begrenzungswand 51 sind Druckfedern 52, 53 angeordnet, die mittels Schrauben 54, 55 einstellbar sind und eine Kraftkomponente auf die Schaber 45, 46 erzeugen. Aufgrund dieser Krafteinwirkung ist gewährleistet, daß die Schaber 45, 46 während der Abreinigungsbewegung kontinuierlich an der Oberfläche der Filterzylinder 24, 28 anliegen.

Zum Abreinigen der Filterzylinder 24, 28 wird die gesamte Reinigungseinrichtung entlang des Pfeils 56 bewegt. Dabei entfernen die Schaber 45, 46 den an der Oberfläche der Filterzylinder anhaftenden Schmutz. Dieser Schmutz wird über den Schlitz 44 in das Schmutzaustragrohr eingeleitet und dort abgeführt. Sofern das Ventil der Schmutzabfuhrleitung 37 geöffnet ist, fließt gereinigte Flüssigkeit zwischen der jeweiligen Schabervorderkante und den Spalten 58, 59 in die Schmutzkammer 57 und transportiert damit durch den Schlitz 44 den von der Oberfläche entfernten Schmutz über die Schmutzabfuhrleitung 37 durch das Ablaßventil 77 in einen nicht dargestellten Schmutzsammelraum.

Figur 4 zeigt - ebenfalls in einer Schnittdarstellung - eine Variante einer Reinigungseinrichtung. Ein U-förmiges Profilelement 60 ist zwischen den beiden Filterzylindern 24, 28 drehbar angeordnet. In diesem Profilelement sind Schlitze 61, 62 vorgesehen, in welchen sich jeweils eine Formfeder 63, 64 und ein Schaberelement 65, 66 befinden. Zur Bildung einer Schmutzkammer 67 ist ein Begrenzungselement 68 dem Profilelement gegenüberliegend angeordent.

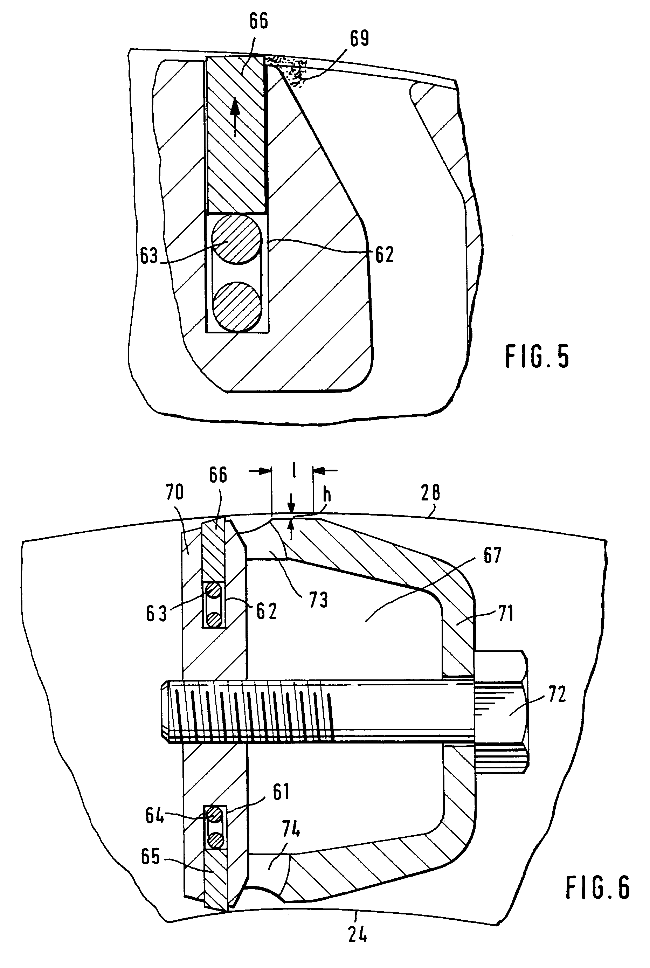

Das Schaberelement 66 ist in Figur 5 in einer Detaildarstellung nochmals näher gezeigt. Auch dieses liegt mit seiner Vorderkante unmittelbar an der Oberfläche des Filters an und bewirkt ein Abreinigen der Oberfläche und ein Zuführen des Schmutzes 69 in die Schmutzkammer 67.

Eine weitere Variante einer Reinigungseinrichtung zeigt Figur 6. Hier ist zwischen den Oberflächen der Filterzylinder 24, 28 ein Trägerelement 70 vorgesehen, welches wie in Figur 5 dargestellt, mit in Schlitzen 61, 62 angeordneten Schaberelementen 65, 66 und Formfedern 63, 64 versehen ist. Dieses Trägerelement 70 ist an der in Figur 2 gezeigten Trägerplatte 36 und Ringscheibe 41 befestigt. Zur Bildung einer Schmutzkammer 67 ist ein Formstück 71 mittels Schrauben 72 an dem Trägerelement befestigt. Damit der von den Schabern 65, 66 entfernte Schmutz in die Schmutzkammer 67 gelangen kann, ist das Formstück 71 über dünne Stege 73, 74 an dem Trägerelement 70 angelegt, so daß der Schmutz ungehindert in den von dem Formstück 71 gebildeten Innenraum gelangen kann und von dort wiederum über eine Schmutzabfuhrleitung ausgeführt wird.

Wie auch bei der in Figur 3 und Figur 4 dargestellten Begrenzungswand 51 bzw. 68 ist zwischen dem Formstück 71 und der Oberfläche des jeweils an das Formstück angrenzenden Filterzylinders 24, 28 ein Spalt mit einer geringen Spalthöhe h angeordnet. Die Spalthöhe h ist dabei so bemessen, daß selbst die größten Schmutzablagerungen ungehindert diesen Spalt passieren können, um dann von dem Schaber in den Schmutzsammelraum gefördert zu werden.

## Patentansprüche

1. Spaltfilter für Flüssigkeiten mit
• einem ersten hohlzylindrischen Filterzylinder (24) und wenigstens einem zweiten hohlzylindrischen Filterzylinder (28), der von dem ersten beabstandet und konzentrisch zu diesem angeordnet ist, wobei die Filterzylinder (24, 28) durch wenigstens eine Deckscheibe (16) miteinander verbunden sind.
• einem Zulauf (11), der mit dem Raum zwischen den Filterzylindern (24, 28) in Verbindung steht,
• einem Ablauf (12) für das gereinigte Medium,
• einer innerhalb des Raumes zwischen den Filterzylindern (24, 28) und sich über deren gesamte wirksame Filterlänge erstreckende Reinigungseinrichtung (17) und
• einer Vorrichtung (14) zum Bewegen der Reinigungseinrichtung (17) entlang der gesamten Umfangsfläche der Filterzylinder,
• wobei die Reinigungseinrichtung (17) an den Filterzylindern (24, 28) anliegende Abreinigungselementen (45,46) aufweist
• und ein schmutzaustragrohr (43) vorgesehen ist, in welchem der von der Oberfläche der Filterzylinder (24, 28) entfernte Schmutz abgeleitet wird wobei das Schmutzaustragrohr (43) einen Einlaßschlitz (44) aufweist, der sich über die gesamte wirksame Filterlänge erstreckt, wobei auf dem Außenmantel des Schmutzaustragrohres (43) zwei Schaber (45,46) angeordnet sind, wobei jeder Schaber (45, 46) jeweils an einem der Filterzylinder (24, 28) unter Federvorspannung gleitend anliegt und ein Begrenzungswand (51) vorgesehen ist, die an Schmutzkammer (57) begrenzt, die sich über den Bereich der Schabervorderkante, einem Teilbereich der zu reinigenden Oberfläche der Filterzylinder (24, 28) und über einen Teil des Schmutzaustragrohres (43) erstreckt.

2. Spaltfilter nach Anspruch 1, dadurch gekennzeichnet, daß den Abreinigungselementen ein Schmutzsammelraum nachgeordnet ist, in welchen der an den Filterzylindern (24, 28) anhaftende Schmutz über eine Rückspülung in das Schmutzaustragrohr (43) eingeleitet wird.

3. Spaltfilter nach einem der vorherigen Ansprüche, wobei weitere Filterzylinder (75, 76) paarweise und konzentrisch zu dem ersten und zweiten Filterzylinder (24, 28) angeordnet sind und zwischen diesen ebenfalls eine Reinigungseinrichtung (19) vorgesehen ist.

4. Spaltfilter nach einem der vorhergehenden Ansprüche, wobei jeder Filterzylinder (24, 28, 75, 76) aus einer Drahtwicklung oder einem Plattenstapel besteht und wobei die einzelnen Windungen der Wicklung bzw. die einzelnen Platten voneinander beabstandet sind und Spalte für den Durchtritt der Flüssigkeit bilden.

5. Spaltfilter nach Anspruch 4, wobei die Spalte der Filterzylinder axial verlaufend angeordnet sind.

6. Spaltfilter nach Anspruch 1, 2 oder 3, wobei die Filterzylinder mit Siebgewebe versehen sind.

7. Spaltfilter nach einem der vorhergehenden Ansprüche, wobei dem Schmutzaustragsrohr (43) eine Schmutzabfuhrleitung (37) nachgeordnet und diese mit einem Absperrventil (77) versehen ist.

8. Reinigungseinrichtung zur Reinigung eines Spaltfilters nach Anspruch 1, wobei ein U-förmiges, sich über die gesamte wirksame Filterlänge erstreckendes Profilelement (60) zwischen den beiden konzentrisch angeordneten Filterzylindern (24, 28) angeordnet ist, welches Abstreifer (65, 66) enthält, die unter Federvorspannung auf die Oberfläche der Filterzylinder (24, 28) gerichtet sind, und daß eine Begrenzungswand (68) vorgesehen ist, die vor dem U-förmigen Profilelement (60) angeordnet ist und eine Schmutzkammer (67) zwischen den Abstreifern (65, 66) und dem Inneren des U-förmigen Profilelements (60) bildet.

9. Reinigungseinrichtung nach Anspruch 6 oder 7, wobei die Begrenzungswand (57,68) von den Filterzylindern (24, 28) beabstandet ist und der Abstand derart bemessen ist, daß die größten Schmutzpartikel zwischen Begrenzungswand (57, 68) und Filterzylinder (24, 28) hindurchgelangen.

10. Reinigungseinrichtung nach Anspruch 8, wobei die Länge (l) des Spaltes zwischen der Begrenzungswand (57, 68) und dem benachbarten Filterzylinder (24, 28) mindestens dem Fünffachen der Höhe (h) entspricht.

11. Reinigungseinrichtung nach einem der vorherigen Ansprüche 8 bis 11, wobei zum Bewegen der Reinigungseinrichtung (17) ein elektrischer, pneumatischer oder hydraulischer Antrieb (14) vorgesehen ist.

12. Reinigungseinrichtung nach einem der vorherigen Ansprüche 8 bis 12, wobei zwischen dem Antrieb (14) und einer an der Reinigungseinrichtung (17) angeordneten Spindel (32) eine Kupplung (33) mit einer Drehmomentbegrenzung vorgesehen ist.

13. Spaltfilter nach einem der vorhergehenden Ansprüche 1 bis 7, wobei jeder Filterzylinder (24, 28) über Stehbolzen (26, 27, 30), die sich über die gesamte Länge der Filterzylinder (24, 28) erstrecken, an der Deckscheibe (16) befestigt ist.

## Claims

1. Gap filter for liquids, having
- a first hollow-cylindrical filter cylinder (24) and at least a second hollow-cylindrical filter cylinder (28), which is spaced from the first cylinder and is disposed concentrically relative to the first cylinder, the filter cylinders (24, 28) being interconnected by at least one cover plate (16),
- an inlet (11), which communicates with the space between the filter cylinders (24, 28),
- an outlet (12) for the filtered medium,
- a cleaning arrangement (17), which extends within the space between the filter cylinders (24, 28) and over their entire effective filter length, and
- a device (14) for moving the cleaning arrangement (17) along the entire circumferential face of the filter cylinders,
- the cleaning arrangement (17) having dirt-removing members (45, 46), which abut against the filter cylinders (24, 28),
- and a dirt extractor pipe (43) is provided, in which the dirt, which has been removed from the surface of the filter cylinders (24, 28), is conducted-away, the dirt extractor pipe (43) having an inlet slot (44) which extends over the entire effective filter length, two scrapers (45, 46) being disposed on the exterior of the dirt extractor pipe (43), each scraper (45, 46) slidingly abutting against one of the filter cylinders (24, 28) under initial spring tension, and a boundary wall (51) being provided, which limits the dirt chamber (57), which extends over the region of the front edge of the scrapers, over a portion of the surface of the filter cylinders (24, 28) to be cleaned, and over part of the dirt extractor pipe (43).

2. Gap filter according to claim 1, characterised in that a dirt collecting area is disposed downstream of the dirt-removing members, the dirt which adheres to the filter cylinders (24, 28) being introduced into said area via a back-flushing into the dirt extractor pipe (43).

3. Gap filter according to one of the preceding claims, wherein additional filter cylinders (75, 76) are disposed in pairs and concentrically relative to the first and second filter cylinders (24, 28), and a cleaning arrangement (19) is also disposed between said cylinders.

4. Gap filter according to one of the preceding claims, wherein each filter cylinder (24, 28, 75, 76) comprises a wire coil or a stack of discs, and wherein the individual windings of the coil, or respectively the individual discs, are spaced from one another and form gaps for the liquid to pass therethrough.

5. Gap filter according to claim 4, wherein the gaps of the filter cylinders are disposed so as to extend axially.

6. Gap filter according to claims 1, 2 or 3, wherein the filter cylinders are provided with filter mesh.

7. Gap filter according to one of the preceding claims, wherein a dirt discharge duct (37) is disposed downstream of the dirt extractor pipe (43) and is provided with a shut-off valve (77).

8. Cleaning arrangement for cleaning a gap filter according to claim 1, wherein a U-shaped profile member (60), which extends over the entire effective filter length, is disposed between the two concentrically disposed filter cylinders (24, 28), which member includes stripping devices (65, 66) orientated towards the surface of the filter cylinders (24, 28) under initial spring tension, and in that a boundary wall (68) is provided which is disposed in front of the U-shaped profile member (60) and forms a dirt chamber (67) between the stripping devices (65, 66) and the interior of the U-shaped profile member (60).

9. Cleaning arrangement according to claim 6 or 7, wherein the boundary wall (57, 68) is spaced from the filter cylinders (24, 28), and the spacing is of such dimensions that the largest dirt particles pass between boundary wall (57, 68) and filter cylinder (24, 28).

10. Cleaning arrangement according to claim 8, wherein the length (l) of the gap between the boundary wall (57, 68) and the adjacent filter cylinder (24, 28) corresponds to at least a fifth of the height (h).

11. Cleaning arrangement according to one of the preceding claims 8 to 11, wherein an electric, pneumatic or hydraulic drive (14) is provided in order to move the cleaning arrangement (17).

12. Cleaning arrangement according to one of the preceding claims 8 to 12, wherein a coupling (33) is provided with a torque limiter between the drive (14) and a spindle (32), which is disposed on the cleaning arrangement (17).

13. Gap filter according to one of the preceding claims 1 to 7, wherein each filter cylinder (24, 28) is mounted on the cover plate (16) via stay rods (26, 27, 30), which extend over the entire length of the filter cylinders (24, 28).

## Revendications

1. Filtre à fente pour liquides, comprenant :
• un premier cylindre creux de filtration (24) et au moins un deuxième cylindre creux de filtration (28), monté concentriquement à une certaine distance du premier, les cylindres de filtration (24, 28) étant reliés entre eux par au moins un disque de couverture (16),
• une amenée (11) communiquant avec la chambre située entre les cylindres de filtration (24, 28),
• une sortie (12) pour le liquide épuré,
• un dispositif de nettoyage situé dans la chambre entre les cylindres (24, 28) et s'étendant sur toute la longueur efficace des filtres,
• un dispositif (14) pour déplacer le dispositif de nettoyage (17) le long de toute la surface périphérique des cylindres de filtration, ou
• le dispositif de filtration (17) comprend des éléments de nettoyage (45, 46) en appui sur les cylindres de filtration (24, 28)
• et il est prévu un tube (43) évacuant les saletés retirées de la surface des cylindres de filtration (24, 28), ce tube d'évacuation présentant une fente d'entrée s'étendant sur toute la longueur efficace des filtres et, montés sur son enveloppe externe, deux racleurs (45, 46), en appui glissant sous pression élastique sur les cylindres (24, 28) respectivement et une paroi (51), délimitant la chambre des saletés (57) s'étend sur la zone du bord avant du racleur, sur une partie de la surface des cylindres (24, 28) à nettoyer et sur une partie du tube (43) d'évacuation des saletés.

2. Filtre à fente selon la revendication 1,
caractérisés en ce que
en aval des éléments de nettoyage se trouve une chambre collectrice des saletés dans laquelle les saletés adhérant aux cylindres de filtration (24, 28) sont envoyées, par rinçage à contre courant, dans le tube (43) d'évacuation des saletés.

3. Filtre à fente selon une des revendications précédentes,
caractérisé en ce que
d'autres cylindres de filtration (75, 76) sont montés par paires, concentriquement au premier et au deuxième cylindre (24, 28) avec entre eux également un dispositif de nettoyage (19).

4. Filtre à fente selon l'une quelconque des revendications précédentes,
caractérisé en ce que
chaque cylindre de filtration (24, 28, 75, 76) est constitué d'un enroulement de fil ou d'un empilage de plaques, les spires individuelles de l'enroulement ou les plaques de l'empilage étant espacées entre elles en formant des fentes de passage du liquide.

5. Filtre à fente selon les revendications 1, 2 ou 3,
caractérisé en ce que
les fentes des cylindres de filtration sont orientées axialement .

6. Filtre à fente selon les revendications 1, 2 ou 3,
caractérisé en ce que
les cylindres de filtration sont équipés d'un tissu filtrant.

7. Filtre à fente selon les revendications précédentes,
caractérisé en ce que
le tube (43) d'évacuation des saletés est suivi d'une conduite (37) d'évacuation équipée d'une soupape d'arrêt (77).

8. Dispositif de nettoyage d'un filtre à fente selon la revendication 1,
caractérisé en ce qu'
il comprend entre les deux cylindres de filtration concentriques (24, 28), un élément profilé en U s'étendant sur toute la longueur efficace des filtres, ce profilé contenant des racleurs (65, 66) dirigés sous tension élastique vers la surface des cylindres (24, 28) tandis qu'il est prévu, en avant de l'élément profilé (60) en U, une paroi (68) délimitant une chambre de saletés (67) entre les racleurs (65, 66) et l'intérieur de l'élément (60) profilé en U.

9. Dispositif de nettoyage selon la revendication 6 ou 7,
caractérisé en ce que
la paroi (57, 68) est éloignée des cylindres de filtration (24, 28) d'une distance telle que les plus grosses particules de saletés parviennent à passer entre les cylindres (24, 28) et la paroi (57, 68).

10. Dispositif de nettoyage selon la revendication 8,
caractérisé en ce que
la longueur (1) de la fente entre la paroi limitatrice (57, 58) et le cylindre de filtration (24, 28) voisin correspond à au moins cinq fois la hauteur (h).

11. Dispositif de nettoyage selon l'une des revendications précédentes 8 à 10,
caractérisé en ce que
le mouvement du dispositif de nettoyage (17) est assuré par un entraînement électrique, pneumatique ou hydraulique.

12. Dispositif de nettoyage selon l'une des revendications précédentes 8 à 11,
caractérisé en ce qu'
il est prévu entre l'entraînement (14) et une broche (32) montée sur le dispositif de nettoyage (17), un accouplement (33) à limitation de couple.

13. Filtre à fente selon une des revendications précédentes 1 à 6,
caractérisé en ce que
chaque cylindre de filtration (24, 28) est fixé au disque de couverture (16) par des entretoises (26, 27, 30) s'étendant sur toute la longueur des cylindres de filtration (24, 28).
